# EUROPEAN PATENT APPLICATION

(11) **EP 4 265 410 A1**
(43) Date of publication of application: **25.10.2023**
(21) Application number: 21906984.6
(22) Date of filing: 09.12.2021
(51) Int. Cl.: B32B 15/08, B32B 15/18, B32B 37/10, B32B 37/06, C25F 3/02, C23C 2/26, C23C 2/06, C23C 2/40

(54) **COMPOSITE STEEL SHEET HAVING EXCELLENT ADHESIVENESS, AND MANUFACTURING METHOD THEREFOR**

(30) Priority: 18.12.2020 KR 20200179085
(71) Applicant: POSCO Co., Ltd, Pohang-si, Gyeongsangbuk-do 37859 (KR)
(72) Inventor: YOO, Hye-Jin, Gwangyang-si, Jeollanam-do 57807 (KR); BYEON, Chang-Se, Gwangyang-si, Jeollanam-do 57807 (KR); KIM, Jung-Su, Gwangyang-si, Jeollanam-do 57807 (KR); BAEK, Je-Hoon, Gwangyang-si, Jeollanam-do 57807 (KR); LEE, Kang-Min, Gwangyang-si, Jeollanam-do 57807 (KR)
(74) Representative: Meissner Bolte Partnerschaft mbB
(86) International application number: PCT/KR2021/018657
(87) International publication number: WO 2022/131680

(57) **Abstract**

The present invention relates to a composite steel sheet having excellent adhesiveness, and a manufacturing method therefor, and, more particularly, to a light composite steel sheet obtained by forming microstructures on the surface and inside of a plated steel sheet, and then bonding same with a plastic layer to maximize adhesiveness.

## Description

### [Technical Field]

The present disclosure relates to a composite steel sheet having excellent adhesiveness and a manufacturing method therefor.

### [Background Art]

Over the past 20 years, the issue of excessive energy consumption has emerged as a hot topic, and there has been an active movement to lighten materials throughout industry to reduce energy consumption. Concerns about environmental pollution caused by serious energy use and the depletion of energy resources due to a rapid increase in automobile demand have gradually increased. Accordingly, research on lightening of materials has been actively conducted, and the use of lightweight materials such as aluminum has also increased on a year on year basis. Particularly in the automobile industry, the lightening of automobile materials has been a concern for a long time and is a next-generation development goal for all automobile companies. World-renowned automobile manufacturers and parts and materials-related companies have fiercely competed in technology, aiming to produce automobiles with high fuel efficiency through the development of new materials for lightening automobiles and their adoption.

Among lightweight materials, aluminum has been widely used as an automotive material among non-ferrous materials, and in particular, the rate applied to automotive exterior panels has increased. However, aluminum consumes a lot of energy during a processing process and is disadvantageous in terms of price.

Thin, high-strength steel sheets have emerged as a counter material to aluminum. When a high-strength steel sheet is used, there is a problem that the rigidity of the outer sheet is insufficient as the thickness is reduced. In addition, a high-strength steel sheet having a certain thickness or less has a limitation in that fine wrinkles or a springback phenomenon may occur during a processing process.

Therefore, as an alternative, research into a lightweight sandwich steel sheet in which a light polymer layer having adhesive properties is inserted between the steel sheets has been conducted. However, a composite steel sheet in which such a plastic layer is inserted, is subjected to a process of laminating after applying an adhesive to bond the plastic layer and the steel sheet, or after performing plasma treatment on a surface of the steel sheet.

However, the method of applying such an adhesive has problems in that harmful substances are generated or the interface is widened due to processing or temperature change, and a plasma treatment method on the surface of the steel sheet has a limitation in that sufficient adhesive strength between the plastic layer and the steel sheet may not be secured.

(Patent Document 1) Korea Patent No. 10-1728026

### [Disclosure]

### [Technical Problem]

An aspect of the present disclosure is to provide a composite steel sheet having excellent adhesiveness and a manufacturing method therefor.

An aspect of the present disclosure is not limited to the contents described above. Those skilled in the art to which the present disclosure belongs will have no difficulty in understanding the additional objects of the present disclosure from the contents throughout the present specification.

### [Technical Solution]

According to an aspect of the present disclosure, a composite steel sheet may include:
a base steel;
a plating layer provided on at least one surface of the base steel; and
a resin layer provided on the plating layer,
wherein an interface roughness Ra between the plating layer and the resin layer is 0.5 to 1.5 um,
the plating layer has pores therein, and
the pores present in the plating layer have an average diameter of 10 nm to 3 µm.

According to another aspect of the present disclosure, a method for manufacturing a composite steel sheet may include:
obtaining a plated steel sheet by forming a plating layer on at least one surface of the base steel;
performing a primary electrolytic etching treatment on the plated steel sheet by using a primary electrolyte solution containing one or more selected from the group consisting of HCl and NaCl;
performing a secondary electrolytic etching process on the plated steel sheet subjected to the primary electrolytic etching process by using a secondary electrolyte solution containing one or more selected from the group consisting of HNO₃, NaOH, H₃PO₄, H₂SO₄, Na₂SO₄, and NaH₂PO₄; and
performing thermal fusion of a resin sheet on the plated steel sheet subjected to the secondary electrolytic etching process.

### [Advantageous Effects]

As set forth above, according to an exemplary embodiment in the present disclosure, a composite steel sheet having excellent adhesiveness and a manufacturing method therefor may be provided.

Various and beneficial advantages and effects of the present disclosure are not limited to the above description, and will be more easily understood in a process of describing specific embodiments of the present disclosure.

### [Description of Drawings]

FIG. 1 is a schematic diagram of an exemplary structure of a composite steel sheet.
FIG. 2 is a photograph of a composite steel sheet corresponding to Inventive Example 1 of the present disclosure photographed at various angles using a SEM.
FIG. 3 is a graph showing the comparison of bonding force of an untreated material, a material using the adhesive, and a material according to the present disclosure.
FIG. 4 is a schematic diagram schematically showing a structure of a composite steel sheet according to an embodiment of the present disclosure.
FIG. 5 is a schematic diagram schematically showing a structure of a composite steel sheet according to another embodiment of the present disclosure.

### [Best Mode for Invention]

Terms used herein are for describing specific embodiments and are not intended to limit the present disclosure. In addition, the singular forms used herein include the plural forms unless the related definition clearly dictates the contrary.

The meaning of "comprising" as used herein specifies a component, and does not exclude the presence or addition of other components.

Unless otherwise defined, all terms including technical terms and scientific terms used herein have the same meaning as commonly understood by those skilled in the art to which the present disclosure belongs. The terms defined in the dictionary are interpreted to have a meaning consistent with the related technical literature and the currently disclosed content.

Hereinafter, a composite steel sheet according to an aspect of the present disclosure will be described in detail. In the present disclosure, when the content of each element is indicated, it means % by weigh unless otherwise specifically defined.

Conventionally, high-strength steel sheets have been developed according to the demand for lightening of materials, but there were disadvantages such as the formation of fine wrinkles during a processing process. In addition, as a sandwich steel sheet in which a resin layer is inserted between the steel sheets, a technique of applying an adhesive for bonding or laminating after plasma treatment has been developed. However, this technique has problems such as widening of the interface between the resin layer and the steel sheet or insufficient adhesive strength.

Therefore, the present disclosure is to provide a way capable of further improving the bonding force between the plating layer and the resin layer while solving the problems of the prior art. It will be described in detail below.

### [Composite steel sheet]

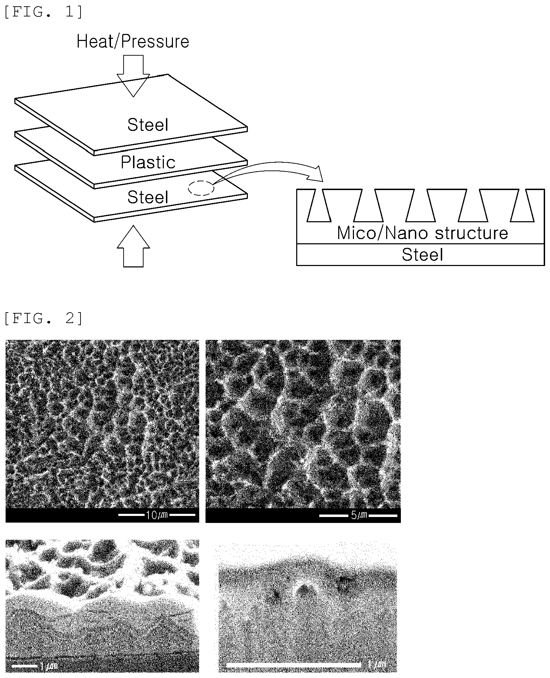

First, a composite steel sheet having excellent resin adhesiveness, which is an aspect of the present disclosure, will be described in detail. A schematic structure of a composite steel sheet according to the present disclosure is shown in FIG. 1, and the composite steel sheet may include: a base steel 1; a plating layer 2 provided on at least one surface of the base steel 1; and a resin layer 3 provided on the plating layer 2.

The present inventors have found that in order to further improve the adhesiveness between the plating layer 2 and the resin layer 3, controlling a surface roughness of a surface 10 (i.e., it means the interface roughness between the plating layer 2 and the resin layer 3 as described above) of the plating layer 2 facing a surface in contact with base steel and the average diameter of pores present in the plating layer are important factors.

In general, adhesion consists of two elements: mechanical bonding and chemical bonding. Although chemical bonding is much stronger than mechanical bonding, chemical bonding is a reaction that results in a compound mainly by bonding at an atomic level, so there was a technical problem that it is difficult to apply between the plated steel sheet and the resin layer.

Accordingly, various attempts have been made to improve the adhesion between the plated steel sheet and the resin layer as prior art. However, a bonding method using a separate adhesive between the plating layer and the resin layer (plastic layer) has disadvantages in that the bonding strength is weak or irregular due to bonding by Van der Waals et al., a bonding thickness is as thick as several tens of um, and the time required for bonding is long. In addition, the method has limitation in that volatile organic compounds occur during bonding, or degradation occurs due to the surrounding environment (humidity, heat, acidic atmosphere, etc.), and it is very difficult to select an adhesive suitable for both materials to be bonded, which requires thorough quality control. In addition, the use of the adhesive caused an increase in the interface between bonding objects, so the peeling phenomenon may occur during processing.

On the other hand, as a method of modifying the resin layer (plastic layer) to impart a chemical functional group, there has been a method of introducing a polar functional group to the surface of the resin layer through UV treatment, ozone treatment, radical reaction, graft reaction, and crosslinking agent treatment. However, the method had problems in that the functional group to be applied had to be different depending on the type of resin (plastic) and a shape of the surface of the steel sheet, a reforming process was complex and time-consuming, and the bonding force between the coated steel sheet and the resin layer (plastic layer) was very weak because no functional groups were present on the surface of the steel sheet.

Accordingly, as a result of intensive studies to solve the above problems, the present inventors found that these problems can be solved by controlling the surface roughness of the plating layer and the average diameter of pores in the plating layer within an appropriate range, and have completed the present disclosure.

That is, according to the present disclosure, it was found that bonding area between the resin layer and the plating layer of the composite steel sheet may be increased by controlling the surface roughness of a surface of the plating layer (i.e., it means the surface 10 where the plating layer 2 contacts the resin layer 3) and the size of the pores in the plating layer. As a result, the bonding force due to Van der Waals force may be increased by increasing the surface area between the plating layer 2 and the resin layer 3, which are to be bonded. In addition, a strong bonding force between the resin layer 3 and the plated steel sheets 1 and 2 may be secured by inducing an interlocking effect exhibited when the resin layer engages and contacts the plating layer to strengthen the bonding force in a normal direction and a shear direction.

Therefore, the present disclosure may provide a composite steel sheet having more improved adhesiveness between the plated steel sheet and the resin layer by solving the problems of the prior art described above. In particular, since the interface between objects to be bonded may be minimized, it is a very useful technique for strengthening the bonding force with the plated steel sheet regardless of the type and characteristics of the resin layer (plastic layer).

To this end, in the composite steel sheet according to the present disclosure, an interface roughness Ra between the plating layer and the resin layer may be 0.5 um to 1.5 um. If the surface roughness Ra of the surface 10 of the plating layer facing a resin layer is less than 0.5 um, there is a risk that bonding force will be insufficient, due to insufficient bonding area at the interface between the resin layer and the plating layer and there is a risk that peeling will occur during processing. On the other hand, if the surface roughness Ra of the surface of the plating layer facing the resin layer exceeds 1.5 um, the resin layer may not fully permeate to the bottom of the plating layer, resulting in degradation of bonding force. Meanwhile, in terms of further improving the effect described above, the lower limit of the Ra value may be 0.7 um, or the upper limit of the Ra value may be 1.3 um. Here, the surface roughness of the surface of the plating layer facing the resin layer may be measured by a surface roughness measuring method, and may be measured using a contact roughness measuring device, a 3D roughness measuring device, or a 3D surface shape measuring device.

In addition, in the composite steel sheet according to the present disclosure, the plating layer may have pores therein, and the pores may have an average diameter of 10 nm to 3 um. If the average diameter of the pores present in the plating layer is less than 10 nm, there is a risk that the bonding area will be increased and the interlocking effect will be insufficient due to the occupancy of the pores by the resin layer described later. On the other hand, if the average diameter of the pores presenting in the plating layer exceeds 3 µm, there is a risk that corrosion resistance will be degraded due to the size of the pores being too large, and the plating adhesiveness may be degraded due to a decrease in the density of the plating layer. Meanwhile, in terms of further improving the aforementioned effect, the lower limit of the average diameter of the pores may be 20 nm, or the upper limit of the average diameter of the pores may be 2.8 um. Here, the pores present in the plating layer mean pores present in a region from the surface of the plating layer facing the resin layer to the surface of the plating layer facing the base steel, based on a cross section in a thickness direction of the plating layer. In addition, the thickness direction as used herein means a direction perpendicular to the rolling direction of the steel sheet, and has the same meaning below unless otherwise specifically defined. However, since it is obvious that the average diameter of the pores present in the plating layer is smaller than the average thickness of the plating layer to be described later, this will not be separately described herein.

Therefore, the average diameter of the pores present in the plating layer means the average value of the values obtained by measuring an equivalent circle diameter of the pores present in the region from the surface (i.e., the surface where the plating layer contacts the resin layer) of the plating layer facing the resin layer to the surface of the plating layer facing the base steel in the thickness direction, based on the cross section in the thickness direction for the plating layer described above. Here, the equivalent circle diameter refers to a value obtained by measuring a particle diameter of a spherical particle assuming the spherical particle drawn with a maximum length of the pore penetrating the inside of the pore as the particle diameter.

According to an aspect of the present disclosure, the plating layer may have an average thickness of 2.5 um to 7.5 um. If the average thickness of the plating layer is less than 2.5 um, there is a risk that the effect of ensuring corrosion resistance by the plating layer will be insufficient, and that non-plating will occur. In addition, if the average thickness of the plating layer exceeds 7.5 µm, plating adhesiveness may be degraded and it may be difficult to form a uniform plating layer. Meanwhile, in terms of further improving the effect described above, the lower limit of the average thickness of the plating layer may be 3.0 um, or the upper limit of the average thickness of the plating layer may be 5.8 µm.

In addition, according to an aspect of the present disclosure, the resin layer may have an average thickness of 100 um to 600 um. If the average thickness of the resin layer is less than 100 µm, a layer having a sufficient thickness as a core material may not be formed between the steel sheets. In addition, if the average thickness of the resin layer exceeds 600 µm, since it is sufficiently melted under thermal fusion conditions and cannot permeate into the plating layer, properties such as adhesiveness may be degraded. The resin layer as used herein means a region from the surface of the resin layer to the interface with the plating layer, and does not include a region in which a resin derived from the resin layer to be described later occupies pores in the plating layer. Therefore, the average thickness of the resin layer means an average value of thicknesses measured in the thickness direction from the surface of the resin layer to the interface with the plating layer.

In addition, although not particularly limited, according to an aspect of the present disclosure, a depth (Tp) from the surface of the plating layer to the pore included in the plating layer and closest to the base steel may be 10 to 90% of the total thickness of the plating layer. If the value of Tp is less than 10%, there is a risk that pores are not generally formed in the plating layer, and thus the effect of improving bonding force due to the pores will be insufficient and peeling will occur during processing. In addition, if the Tp value exceeds 90%, pores are formed even in the base steel due to excessive formation of pores, and thus adhesiveness between the plating layer and the base steel may be degraded, and ultimately, adhesiveness between the steel sheet and the resin layer may be degraded during processing. Meanwhile, in terms of further improving the effect described above, the lower limit of the Tp value may be 20%, or the upper limit of the Tp value may be 85%.

Here, the value of Tp may be obtained by measuring the shortest distance in the thickness direction of the pore closest to the base steel from the surface of the plating layer, based on a cross section in a thickness direction of the composite steel sheet. Specifically, the value of Tp may be obtained by photographing with a scanning electron microscope (SEM), TEM, FIB, etc., so that the cross section in the thickness direction of the composite steel sheet may be observed.

Further, according to one aspect of the present disclosure, the number of pores (Np) having a diameter of 10 nm or more included in a unit area of 9 µm² of a cross section of the plating layer (which means a cut surface in the thickness direction) may be 5 to 30. As a result of additional intensive studies, the present inventors have found that the density of pores present in the plating layer is also an important factor in further improving adhesion to the resin layer described above and at the same time securing corrosion resistance.

That is, if the value of Np is less than 5, there is a risk that bonding force between the resin layer and the plating layer will be insufficient due to an insufficient number of pores per unit area. In addition, if the value of Np exceeds 30, there is a risk that corrosion resistance of the plating layer will be degraded due to an excessive number of pores per unit area. Further, due to the excessive number of pores, the plating layer may not be tightly adhered to the base steel, and the adhesiveness of the plating layer to the base steel may be degraded. As a result, eventually, the bonding force with the resin layer (plastic layer) is also degraded. In the present disclosure, adhesiveness between the resin layer and the plating layer and, primarily, securing the adhesiveness between the base steel and the plating layer are also important factors. That is, in the present disclosure, if the excessive number pores are formed in the plating layer, the adhesive strength between the base steel and the plating layer is also degraded, so in the present disclosure, by controlling the number of pores in the plating layer to an appropriate range, pores are formed in the plating layer provided on the base steel, and then resin is injected between these pores to induce an interlocking effect to ensure physical bonding force. Meanwhile, in terms of further improving the effect described above, the lower limit of the value of Np may be 13, or the upper limit of the value of Np may be 27.

In addition, according to an aspect of the present disclosure, an area fraction of pores (Ap) having a diameter of 10 nm or more to the total area of the cross section of the plating layer (meaning the cross section in the thickness direction) may be 10 to 80%. If the value of Ap is less than 10%, sufficient pores may not be secured, resulting in insufficient interlocking effect. In addition, if the value of Ap exceeds 80%, on the contrary, there is a risk that due to the excessive number of pores, the density of the plating layer will be decreased and the bonding strength after bonding the resin layer will be degraded. Meanwhile, in terms of further improving the effect described above, the lower limit of the value of Ap may be 34%, or the upper limit of the value of Ap may be 75%.

At this time, the value of Ap may be measured using a scanning electron microscope (SEM) so that a cross section of the plating layer in the thickness direction may be observed. However, in the value of Ap, the area of the pores may be measured by measuring all areas of the pores themselves present in the plating layer, and does not exclude the area where the resin derived from the resin layer described later occupies the pores.

Further, according to an aspect of the present disclosure, the fraction of the area (Vp) of area occupied by the resin derived from the resin layer in the pores to the total area of the pores included in the plating layer may be 20 to 90%, and the value of Vp may be measured through SEM cross-section analysis.

If the value of Vp is less than 20%, the interlocking effect may be insufficient, and bonding force may be somewhat decreased. In addition, if the value of Vp exceeds 90%, it is impossible to form a layer having a sufficient thickness for a resin layer (plastic layer) serving as a core when used in a sandwich-type steel sheet.

That is, as a result of intensive studies to further improve the effects of the present disclosure, the present inventors also confirmed the effect of reducing the peeling phenomenon of the junction during processing by controlling the value of Vp to satisfy the numerical range described above to maximize the interlocking effect between the plating layer and the resin layer exhibited by the penetration of the resin layer into the pores in the plating layer and to minimize the interface between objects to be bonded. Due to the resin layer occupying the inside of the pore in an appropriate range, there is also an effect of securing excellent adhesiveness of the resin layer and corrosion resistance of the plating layer at the same time by offsetting the problem of reduced corrosion resistance compared to the case where the pore is present as an empty space. Meanwhile, in terms of further improving the effect described above, the lower limit of the value of Vp may be 48%, or the upper limit of the value of Vp may be 86%.

The present disclosure satisfies the configuration described above. Thus, it is possible to impart dent resistance and secure excellent price competitiveness while using a thin high-strength steel sheet as a plated steel sheet. Through a structure in which a steel sheet and a resin layer (plastic layer) are laminated, it is possible to supplement the rigidity of the outer sheet according to the use of a thin steel sheet and to reduce weight. In addition, it is also possible to prevent phenomena such as fine wrinkles or springback generated during a processing process by laminating a thin high-strength steel sheet with a plastic layer.

On the other hand, according to one aspect of the present disclosure, as the base steel, any steel capable of aluminum-based plating or zinc-based plating may be applied to the present disclosure without any particular limitation.

In addition, the plating layer is preferably an aluminum-based plating layer or a zinc-based plating layer, where the aluminum-based plating layer includes both an aluminum plating layer and an aluminum alloy plating layer, and the zinc-based plating layer includes both a zinc plating layer and a zinc-alloy plating layer. The composition of the plating layer is not particularly limited, but as a representative example, the aluminum-based plating layer may include an excessive amount of Al (i.e., 50% by weight or more), and may include one or more of alloy elements such as Zn, Mg, Si, Sn, Pb, and Fe in order to further improve the physical properties of the plating layer within a range not impairing the object of the present disclosure. Likewise, the zinc-based plating layer may include an excessive amount of Zn (i.e., 50% by weight or more), and may include one or more of alloy elements such as Al, Mg, Si, Sn, Pb, and Fe in order to further improve the physical properties of the plating layer within a range not impairing the object of the present disclosure.

Next, the resin layer may be provided on a surface opposite to the surface on which the plating layer is in contacts with the base steel (i.e., a surface facing the surface on which the plating layer is in contact with the base steel). In the present disclosure, the resin layer is a layer containing 99% or more of resin (residual impurities), and more preferably refers to a layer composed of 100% of resin excluding unavoidable impurities.

Meanwhile, the resin layer is formed of engineering plastics. Engineering plastics is a generic term for high-strength plastics used as industrial and structural materials. Engineering plastics are distinguished from conventional plastics, which are low-molecular substances having a molecular weight of several tens to several hundred, in that they are high molecular materials in the range of several hundred thousand to several million.

The performance and characteristics of engineering plastics differ depending on their chemical structure. Examples of engineering plastics include mainly polyamide, polyacetyl, polycarbonate, polyphenylene oxide, polybutylene terephthalate, etc., and also include polyethylene, polypropylene, polyester, or polyurethane. For example, the polyamide resin has excellent surface hardness, bending strength and alkali resistance, and nylon 6 or nylon 66 is known. In addition, a carbon fiber composite material or a glass fiber composite material may also be used.

In addition, in the composite steel sheet according to an aspect of the present disclosure, it is possible to reduce the weight of the material by laminating a resin layer (plastic layer) on one surface of the steel sheet or between the steel sheets. For example, the thickness ratio of the resin layer and the steel sheet laminated to the resin layer may be in the range of 3:1 to 1:5, or in the range of 2:1 to 1:2. By controlling the thickness of the steel sheet and the resin layer within the above range, it is possible to implement both rigidity and weight reduction of the composite material.

The structure of a representative composite steel sheet is schematically shown in FIG. 1. Specifically, the composite steel sheet may include an additional plated steel sheet on the resin layer, in other words, the resin layer may be a composite steel sheet having a sandwich-type structure by providing an additional plated steel sheet on the surface opposite to the surface in contact with the plating layer.

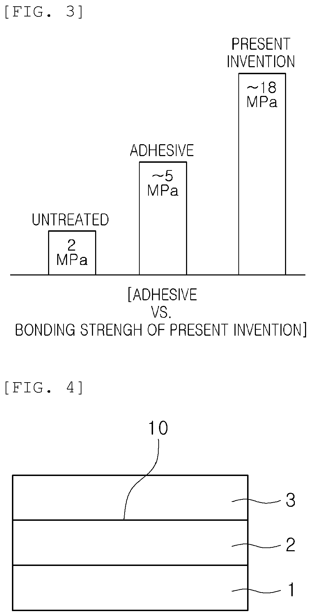

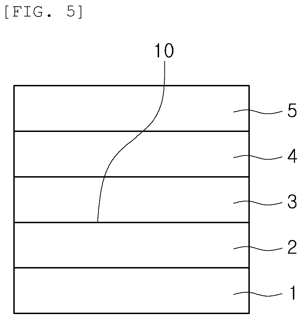

Therefore, as shown in FIG. 4, the composite steel sheet may also have a laminated structure of plated steel sheets 1 and 2/resin layer 3 (i.e., base steel 1/plating layer 2/resin layer 3). Alternatively, as shown in FIG. 5, the composite steel sheet may also have a sandwich-type laminated structure of first plated steel sheets 1 and 2/resin layer 3/second plated steel sheets 4 and 5 (i.e., first base steel 1/first plating layer 2/resin layer 3/second plating layer 4/second base steel 5). Here, the additional plated steel sheet may have the same properties as the plated steel sheet described later (i.e., the additional plated steel sheet may include a first base steel; a first plating layer provided on at least one surface of the first base steel; a resin layer provided on the first plating layer; a second plating layer provided on the resin layer; a second base steel provided on the second plating layer, a surface roughness Ra1 of the surface of the first plating layer facing the a resin layer may be 0.5 to 1.5 um, and a surface roughness Ra2 of the surface of the second plating layer facing the resin layer may be 0.5 to 1.5 um, the first plating layer and the second plating layer may have pores therein, and the average diameter of the pores may be 10 nm to 3 µm).

### [Method of manufacturing composite steel sheet]

Hereinafter, a method for manufacturing a composite steel sheet, which is another aspect of the present disclosure, will be described. However, it should be noted that this does not necessarily mean that the plated steel sheet of the present disclosure should be manufactured by the following manufacturing method.

First, a plating layer is formed on at least one surface of the base steel to obtain a plated steel sheet. Here, as for the method of forming the plating layer, a method commonly known in the art may be applied to the present disclosure without limitation. Therefore, it is not specifically limited in this specification, and for example, all methods such as hot-dip plating, electroplating, and evaporation plating may be applied.

Subsequently, an electrolytic etching treatment is performed on the plated steel sheet under the conditions described later. Here, as the electrochemical etching method, a method known in the art may be equally applied. For example, a zinc plate is installed on an anode and an aluminum plate is installed on a cathode, and they are immersed in the electrolyte solution. When electricity is applied, zinc in the anode may be ZnO and a structure may be formed while being dissolved by an acid solution. The surface may consist of a portion whose properties have changed to zinc oxide after the reaction and a zinc layer that remains as it is. Although a mechanism by which the surface structure is formed has not yet been clarified, it is believed that the electrolyte solution, etching voltage, and etching time affect the formation of the surface structure. In general, zinc may be etched by acids and bases, and as the concentration of the electrolyte solution increases, the degree of etching of the surface may be enhanced as the etching voltage and time increase.

Meanwhile, in the case of the electrolytic etching, a primary electrolytic etching treatment is performed using a primary electrolyte solution containing one or more selected from the group consisting of HCl and NaCl. Here, the primary electrolytic solution etching treatment may be performed at a voltage of 1 to 10 V, and the concentration of one or more materials selected from the group consisting of HCl and NaCl in the primary electrolyte solution may be in the range of 0.1 to 1.5% by weight. By performing the primary electrolytic etching treatment to satisfy the above conditions, it is possible to primarily form pores on the surface of the plated steel sheet. In addition, the time of the primary electrolytic etching treatment may be performed for 1 to 20 seconds.

The plated steel sheet subjected to the primary electrolytic etching treatment may be subjected to a secondary electrolytic etching treatment using a secondary electrolyte solution containing one or more selected from the group consisting of HNO₃, NaOH, H₃PO₄, H₂SO₄, Na₂SO₄, and NaH₂PO₄. Here, the secondary electrolytic etching treatment may be performed for 1 second to 20 minutes at a voltage of 1 to 10 V. In the secondary electrolyte solution, the concentration of one or more materials selected from the group consisting of HNO₃, NaOH, H₃PO₄, H₂SO₄, Na₂SO₄, and NaH₂PO₄ may range from 0.01 to 1.5 M. By performing the secondary electrolytic etching treatment to satisfy the above conditions, it is possible to form pores not only on the surface of the plated steel sheet but also in the inside region of the plating layer (in the thickness direction), thereby achieving the desired effect in the present disclosure.

That is, according to the present disclosure, by performing two-step electrolytic etching treatment controlled under strict conditions is performed on the plated steel sheet before forming the resin layer (or plastic layer), it is possible to form a fine concave-convex structure on the surface of the plating layer and at the same time form a number of fine pores in the inside of the plating layer, and as a result, effects such as excellent adhesiveness and processability desired in the present disclosure may be exhibited.

Next, a composite steel sheet in which a resin layer is formed on the plated steel sheet may be obtained by performing thermal fusion of a polymer sheet on the plated steel sheet subjected to the secondary electrolytic etching process. Here, the thermal fusion process may be performed in a temperature range of 150 to 230°C. If the temperature of the thermal fusion process is less than 150°C, there is a risk that the resin may not be able to permeate through the pores, so sufficient adhesive strength will not be secured. In addition, if the temperature of the thermal fusion process exceeds 230°C, there is a risk that after all of the resin melts and partially penetrates into the pores, it will be flow out to the side of the steel sheet without forming a layer between the steel sheets.

### [Mode for Invention]

The present disclosure will hereinafter be described in more detail through Inventive Examples. However, it should be noted that the following Examples are only for explaining the present disclosure through examples, and are not intended to limit the scope of the present disclosure. This is because the scope of the present disclosure is determined by the matters described in the claims and the matters reasonably inferred therefrom.

### (Experimental Example 1)

A melted zinc steel sheet was prepared at % by weight, and then washed for 20 minutes in a mixed solution of acetone and methanol contained in an ultrasonic cleaner. Subsequently, the zinc steel sheet was rinsed with distilled water, dried with compressed air, and then an edge of the steel sheet was masked using an insulating tape.

Next, a galvanized steel sheet and the aluminum sheet were immersed in the electrolyte solution shown in Table 1 below. The primary electrolytic etching was performed by setting the galvanized steel sheet at the anode and the aluminum sheet at a distance of about 5 cm at the cathode, and then the second electrolytic etching was performed under the conditions shown in Table 1 below. After rinsing the specimen thus etched with distilled water, the tape was removed, the water was removed using compressed air, and then, the moisture was removed in a drying oven at about 60°C.

Then, a PA6 resin sheet was thermally fused to a surface of the electrolytically etched plated steel sheet under conditions of 180°C to obtain a composite steel sheet. For the composite steel sheet thus obtained, the properties shown in Table 2 below were evaluated and shown. At this time, the following Ra was measured using a three-dimensional surface roughness measuring device immediately after etching the steel sheet. In addition, a cross-sectional specimen was prepared by cutting the composite steel sheet in the thickness direction (direction perpendicular to the rolling direction). Thereafter, the cross-sectional specimen was observed with a scanning electron microscope (SEM) to measure the average diameter of pores in the plating layer in the same manner as described in the specification, and the average thickness and Tp value (corresponding to the average) of the plating layer.

**[Table 1]**

| No. | Primary electrolytic etching conditions | | | Secondary electrolytic etching conditions | | |
|---|---|---|---|---|---|---|
| | Electrolyte solution type | Electrolyte solution concentration | Voltage [V] | Electrolyte solution type | Electrolyte solution concentration | Voltage [V] |
| Inventive Example 1 | HCl | 0.5% | 10V | HNO₃ | 1.5M | 1V |
| Inventive Example 2 | HCl | 1.5% | 10V | HNO₃ | 0.01M | 1V |
| Inventive Example 3 | HCl | 0.5% | 10V | NaOH | 0.01M | 1V |
| Comp. Example 1 | HCl | 0.5% | 10V | - | | |
| Comp. Example 2 | Plasma treatment | | | | | |
| Comp. Example 3 | Use of adhesive | | | | | |

**[Table 2]**

| No. | Ra* [µm] | Average diameter of pores in plating layer | Average thickness of plating layer [µm] | Tp* |
|---|---|---|---|---|
| Inventive Example 1 | 1.2 | 20 nm | 3.5 | 20 |
| Inventive Example 2 | 1.1 | 0.9 um | 4.2 | 35 |
| Inventive Example 3 | 0.8 | 1.6 um | 3.9 | 48 |
| Comp. Example 1 | 1.1 | 0.4 um | 3.5 | 7 |
| Comp. Example 2 | 0.7 | 0.3 um | 3.6 | 5 |
| Comp. Example 3 | 1.2 | 0.1 um | 2.7 | 2 |

| | | | | |
|---|---|---|---|---|
| Ra*: Interface roughness between the plating layer and the resin layer Tp*: Depth ratio [%] from the surface of the plating layer to the pores that included inside the plating layer and closest to the base steel relative to the total thickness of the plating layer [%] | | | | |

For the composite steel sheets obtained from each of Invention Examples and Comparative Examples, each property was evaluated according to the following criteria.

### <Adhesiveness>

The adhesiveness was measured for bonding strength through a conventional lap shear test (Lap. shear test, ASTM D 1002), and evaluated according to the following criteria.
⊚: 15 MPa or more
○: 10 MPa or more and less than 14 MPa
△: 5 MPa or more and less than 9 MPa
   ×: less than 5 MPa

### <Weldability>

For weldability evaluation, it was measured by the method of ISO18278-2, F1-6mm, 2.1 kN, 140 msW/T, and 140 msH/T, and evaluated according to the following criteria.
⊚: 100% electrification (securing welding strength)
○: 90% electrification (securing welding strength)
△: 50% electrification (unsecured welding strength)
×: welding strength measurement impossible (welding impossible)

### <Processability>

After Ericsson evaluation (pushing the punch stroke up to a height of 6 mm with a constant force, checking whether the material does not burst and hold up well) and 180° bending using a VISE, it was confirmed whether the plastic and the steel sheet were separated.
⊚: 100% no peeling
○: 90% or more no peeling (fine peeling)
△: 50% or more peeling
×: 100% interfacial peeling

**[Table 3]**

| No. | Adhesiveness | Weldability | Processability |
|---|---|---|---|
| Inventive Example 1 | ○ | ⊚ | ⊚ |
| Inventive Example 2 | ○ | ○ | ○ |
| Inventive Example 3 | ○ | ⊚ | ⊚ |
| Comp. Example 1 | × | ○ | × |
| Comp. Example 2 | × | Δ | × |
| Comp. Example 3 | Δ | ○ | Δ |

It was confirmed that in the case of Inventive Examples 1 through 3 satisfying all the conditions of the composite steel sheet specified in the present disclosure, corrosion resistance was excellent, and adhesiveness, weldability, and processability were all excellent.

On the other hand, in the case of Comparative Example 1 in which electrolytic etching treatment is performed in one step and Comparative Example 2 in which plasma treatment is performed without satisfying the electrolytic etching treatment conditions specified in the present disclosure, at least one of the properties of Ra and the average diameter of the pores in the plating layer were not satisfied. Accordingly, it was confirmed that in Comparative Examples 1 and 2, even if corrosion resistance was secured, one or more properties of adhesion, weldability, and processability were inferior.

In particular, FIG. 3 is a comparison result of bonding strength (joint strength) in the case of untreated material, in the case of using an adhesive (corresponding to Comparative Example 3), and in the case of the present disclosure. As can be seen in FIG. 3, according to the present disclosure, it was confirmed that the bonding force was the best due to the interlocking effect between the pores formed in the plating layer and the resin layer.

### (Experimental Example 2)

A composite steel sheet was manufactured in the same manner as in Experimental Example 1 described above, except for changing the conditions as shown in Table 4 below. For each composite steel sheet thus obtained, values measured in the same manner as in Table 2 are shown in Table 5 below, and results evaluated according to the same criteria are shown in Table 6 below. In addition, the values in Table 5 below were measured and shown for the composite steel sheet. Specifically, after preparing a cross-sectional specimen in the thickness direction in the same way as in Experimental Example 1, it was photographed by SEM and Np, Ap, and Vp values were measured in the same manner as described in the specification

**[Table 4]**

| No. | Primary electrolytic etching conditions | | | | Secondary electrolytic etching conditions | | | |
|---|---|---|---|---|---|---|---|---|
| | Elec trol yte solu tion type | Elec trol yte solu tion conc entr atio n | Vol tag e [V] | Time [s] | Elect rolyt e solut ion type | Elec trol yte solu tion conc entr atio n | Vo it ag e [V ] | Time |
| Invent ive Exampl e 4 | HCl | 1% | 10V | 2s | H₃PO₄ | 1.0M | 2V | 10 min |
| Invent ive Exampl e 5 | HCl | 0.5% | 10V | 5s | H₂SO₄ | 0.2M | 10 V | 30s |
| Invent ive Exampl e 6 | HCl | 1 % | 10V | 2s | H₂SO₄ | 1.5M | 10 V | 5s |
| Comp. Exampl e 4 | HCl | 0.5% | 10V | 5s | HNO₃ | 1.6M | 1V | 1s |
| Comp. Exampl e 5 | HCl | 0.5% | 10V | 5s | NaOH | 0.00 5M | 1V | 30 min |
| Comp. Exampl e 6 | HCl | 2.0% | 10V | 5s | H₂SO₄ | 0.2M | 10 V | 30s |

**[Table 5]**

| No. | Ra* [µm] | Average diameter of pores in plating layer | Average thicknes s of plating layer [µm] | Tp * | Np* | Ap* | Vp * |
|---|---|---|---|---|---|---|---|
| Inventi ve Example 4 | 1.1 | 100 nm | 3.0 | 60 | 22 | 75 | 86 |
| Inventi ve Example 5 | 0.7 | 2.8 um | 3.6 | 85 | 13 | 34 | 48 |
| Inventi ve Example 6 | 1.3 | 2.5 um | 5.8 | 71 | 27 | 48 | 60 |
| Comp. Example 4 | 0.5 | 3.7 um | 5.9 | 25 | 10 | 7 | 14 |
| Comp. Example 5 | 1.6 | 5.1 um | 2.2 | 80 | 5 | 8 | 10 |
| Comp. Example 6 | 0.8 | 6.3 um | 3.9 | 9 | 4 | 25 | 17 |

| | | | | | | | |
|---|---|---|---|---|---|---|---|
| Np*: The number of pores having a diameter of 10 nm or more included in a unit area of 9 µm² in the cross section of the plating layer [number/µm²] Ap*: Area fraction of pores having a diameter of 10 nm or more to the total area of the cross section of the plating layer [%] Vp*: Area fraction occupied by the resin layer in the pores to the total area of pores included in the plating layer [%] | | | | | | | |

**[Table 6]**

| No. | Adhesiveness | Weldability | Processability |
|---|---|---|---|
| Inventive Example 4 | ⊚ | ⊚ | ⊚ |
| Inventive Example 5 | ⊚ | ○ | ○ |
| Inventive Example 6 | ⊚ | ⊚ | ⊚ |
| Comp. Example 4 | × | ○ | × |
| Comp. Example 5 | × | Δ | × |
| Comp. Example 6 | Δ | ○ | Δ |

It was confirmed that in the case of Inventive Examples 4 through 6 satisfying all the conditions of the composite steel sheet specified in the present disclosure, corrosion resistance was excellent, and adhesiveness, weldability, and formability were all excellent.

On the other hand, it was confirmed that in the case of Comparative Examples 4 through 6, which do not satisfy the electrolytic etching treatment conditions specified in the present disclosure, one or more properties of the average diameter of the pores in the plating layer were not satisfied, and thus at least one of adhesiveness, weldability, and formability were degraded.

## Claims

1. A composite steel sheet comprising:
a base steel;
a plating layer provided on at least one surface of the base steel; and
a resin layer provided on the plating layer,
wherein an interface roughness Ra between the plating layer and the resin layer is 0.5 to 1.5 um,
the plating layer has pores therein, and
the pores present in the plating layer have an average diameter of 10 nm to 3 um.

2. The composite steel sheet of claim 1, wherein a depth from a surface of the plating layer to the pore included in the plating layer and closest to the base steel is 10 to 90% of the total thickness of the plating layer.

3. The composite steel sheet of claim 1, wherein the number of pores having a diameter of 10 nm or more included in a unit area of 9 µm² of a cross section of the plating layer is 5 to 30.

4. The composite steel sheet of claim 1, wherein an area fraction of pores having a diameter of 10 nm or more to the total area of the cross section of the plating layer is 10 to 80%.

5. The composite steel sheet of claim 1, wherein a fraction of the area occupied by the resin layer in the pores to the total area of the pores included in the plating layer is 20 to 90%.

6. The composite steel sheet of claim 1, further comprising a second plating layer provided on the resin layer; and a second base steel provided on the second plating layer.

7. A method for manufacturing a composite steel sheet comprising:
obtaining a plated steel sheet by forming a plating layer on at least one surface of a base steel;
performing a primary electrolytic etching treatment on the plated steel sheet by using a primary electrolyte solution containing one or more selected from the group consisting of HCl and NaCl;
performing a secondary electrolytic etching process on the plated steel sheet subjected to the primary electrolytic etching process by using a secondary electrolyte solution containing one or more selected from the group consisting of HNO₃, NaOH, H₃PO₄, H₂SO₄, Na₂SO₄, and NaH₂PO₄; and
performing thermal fusion of a resin sheet on the plated steel sheet subjected to the secondary electrolytic etching process.

8. The method of claim 7, wherein
the performing of the primary electrolytic etching treatment is performed for 1 to 20 seconds at a voltage of 1 to 10V, and
the performing of the secondary electrolytic etching process is performed for 1 second to 20 minutes at a voltage of 1 to 10V.

9. The method of claim 7, wherein the performing of the thermal fusion of the resin sheet is performed at a temperature of 150 to 230°C.

10. The method of claim 7, wherein the primary electrolyte solution has a concentration of 0.1 to 1.5% of one or more materials selected from the group consisting of HCl and NaCl.

11. The method of claim 7, wherein the secondary electrolyte has a concentration of 0.01 to 1.5 M of one or more materials selected from the group consisting of HNO₃, NaOH, H₃PO₄, H₂SO₄, Na₂SO₄, and NaH₂PO₄.
